# EUROPEAN PATENT APPLICATION

(11) **EP 4 242 962 A1**
(43) Date of publication of application: **13.09.2023**
(21) Application number: 21888924.4
(22) Date of filing: 14.09.2021
(51) Int. Cl.: G06T 7/00

(54) **RECOGNITION SYSTEM, RECOGNITION METHOD, PROGRAM, LEARNING METHOD, TRAINED MODEL, DISTILLATION MODEL AND TRAINING DATA SET GENERATION METHOD**

(30) Priority: 06.11.2020 JP 2020186047
(71) Applicant: OMRON Corporation, Kyoto 600-8530 (JP)
(72) Inventor: YABUUCHI, Tomohiro, Kyoto-shi, Kyoto 600-8530 (JP); YOSHIDA, Eiji, Kyoto-shi, Kyoto 600-8530 (JP)
(74) Representative: HGF
(86) International application number: PCT/JP2021/033794
(87) International publication number: WO 2022/097371

(57) **Abstract**

The recognition system stores a learned model (M10) including first and second model parts (M11, M12). The first model part (M11) outputs, in response to input of a first resolution image (P10) showing a target object (100) at a first resolution, a second resolution image (P20) corresponding to an image resulting from conversion of the first resolution image (P10) into a second resolution higher than the first resolution and a difference image (P30) corresponding to a difference between the first resolution image (P10) and the second resolution image (P20). The second model part (M12) outputs a feature amount (F11) of the target object (100) in response to input of the second resolution image (P20) and the difference image (P30). The arithmetic circuit obtains the first resolution image (P10) as a target image, and provides the obtained target image to the learned model (M10) to allow it to calculate a feature amount (F11) of a target object (100) shown in the target image.

## Description

### TECHNICAL FIELD

The present disclosure generally relates to recognition systems, recognition methods, programs, learning methods, learned models, distillation models, and, learning dataset generation methods. The present disclosure in particular relates to a recognition system, a recognition method, a program, a learning method, a learned model, a distillation model, and, a learning dataset generation method, in relation to a target object shown in an image.

### BACKGROUND ART

Non patent literature 1 discloses techniques of facial recognition using deep learning. Non patent literature 1 discloses, to reduce an influence due to a low level of resolution of an image used for facial recognition, using a generation network (super-resolution network) generating a high resolution image from a low resolution image, and performing facial recognition based on the high resolution image obtained from the super-resolution network.

### CITATION LIST

### NON PATENT LITERATURE

Non Patent Literature 1: Bayram Bayramli, et al., "FH-GAN: Face Hallucination and Recognition using Generative Adversarial", [online], 2019, May 16, Accessed 2020, September 3, Cornell University, Internet <URL: https://arxiv.org/abs/1905.06537>

### SUMMARY OF INVENTION

### TECHNICAL PROBLEM

The present disclosure is to provide a recognition system, a recognition method, a program, a learning method, a learned model, a distillation model, and a learning dataset generation method, which are capable of improving accuracy of recognition of a target object.

### SOLUTION TO PROBLEM

A recognition system according to one aspect of the present disclosure includes: a storage device for storing a learned model; and an arithmetic circuit accessible to the storage device. The learned model includes: a first model part learned to, in response to input of a first resolution image showing a target object at a first resolution, output a second resolution image and a difference image, the second resolution image being corresponding to an image resulting from conversion of the first resolution image into a second resolution higher than the first resolution, the difference image being corresponding to a difference between the first resolution image and the second resolution image; and a second model part learned to output a feature amount of the target object in response to input of the second resolution image and the difference image. The arithmetic circuit is configured to perform: obtainment processing of obtaining the first resolution image as a target image; and inference processing of providing the target image obtained by the obtainment processing to the learned model to allow the learned model to calculate a feature amount of a target object shown in the target image.

A recognition method according to one aspect of the present disclosure is a recognition method performed by an arithmetic circuit accessible to a storage device for storing a learned model. The learned model includes: a first model part learned to, in response to input of a first resolution image showing a target object at a first resolution, output a second resolution image and a difference image, the second resolution image being corresponding to an image resulting from conversion of the first resolution image into a second resolution higher than the first resolution, the difference image being corresponding to a difference between the first resolution image and the second resolution image; and a second model part learned to output a feature amount of the target object in response to input of the second resolution image and the difference image. The recognition method includes: obtainment processing of obtaining the first resolution image as a target image; and inference processing of providing the target image obtained by the obtainment processing to the learned model to allow the learned model to calculate a feature amount of a target object shown in the target image.

A program according to one aspect of the present disclosure is a program for performing the recognition method by the arithmetic circuit.

A learning method according to one aspect of the present disclosure includes: a preparation step of preparing a model; and a learning step of performing machine learning using the model prepared by the preparation step. The model includes a first model part, a second model part, and a third model part. The first model part is a model for, in response to input of a first resolution image showing a target object at a first resolution, outputting a second resolution image and a difference image, the second resolution image being corresponding to an image resulting from conversion of the first resolution image into a second resolution higher than the first resolution, the difference image being corresponding to a difference between the first resolution image and the second resolution image. The second model part is a model for outputting a feature amount of the target object in response to input of the second resolution image and the difference image from the first model part. The third model part is a model for outputting a result of recognition of the target object in response to input of a feature amount of the target object from the second model part. The learning step includes training the model to learn a relationship between the first resolution image and a feature amount of a target object shown in the first resolution image, by machine learning using a learning dataset which includes the first resolution image as input and a result of recognition of a target object shown in the first resolution image as ground truth.

A learned model according to one aspect of the present disclosure includes: a first model part learned to, in response to input of a first resolution image showing a target object at a first resolution, output a second resolution image and a difference image, the second resolution image being corresponding to an image resulting from conversion of the first resolution image into a second resolution higher than the first resolution, the difference image being corresponding to a difference between the first resolution image and the second resolution image; and a second model part learned to output a feature amount of the target object in response to input of the second resolution image and the difference image.

A distillation model according to one aspect of the present disclosure is generated by distillation of the learned model.

A recognition system according to one aspect of the present disclosure includes: a storage device for storing the distillation model; and an arithmetic circuit accessible to the storage device. The arithmetic circuit is configured to perform: obtainment processing of obtaining the first resolution image as a target image; and inference processing of providing the target image obtained by the obtainment processing to the distillation model to allow the distillation model to calculate a feature amount of a target object shown in the target image.

A learning model generation method according to one aspect of the present disclosure includes: a first step of obtaining a reference image showing a target object; a second step of converting the reference image into a low resolution image at a resolution lower than that of the reference image; a third step of generating a difference image corresponding to a difference between the reference image and the low resolution image; and a fourth step of generating a learning dataset including the lower resolution image as input and a set of the reference image and the difference image as ground truth.

### ADVANTAGEOUS EFFECTS OF INVENTION

Aspects of the present disclosure are capable of improving accuracy of recognition of a target object.

### BRIEF DESCRIPTION OF DRAWINGS

FIG. 1 is a block diagram of a recognition system according to one embodiment.
FIG. 2 is an explanatory diagram illustrating a recognition method using a learned model, which is performed by the recognition system.
FIG. 3 is a flow chart of the recognition method.
FIG. 4 is a flow chart of a learning method for generating the learned model used in the recognition system.
FIG. 5 is an explanatory diagram of the learning method.
FIG. 6 is a block diagram of a learning system for performing the learning method.

### DESCRIPTION OF EMBODIMENTS

### (1) EMBODIMENTS

### (1-1) OUTLINE

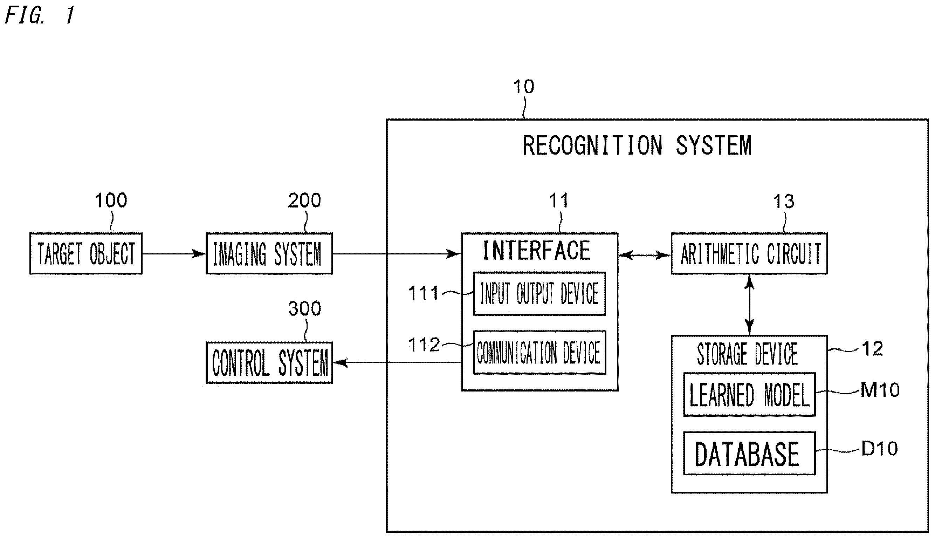

FIG. 1 shows a recognition system 10 according to one embodiment. The recognition system 10 is a system for conducting recognition of a target object 100. Especially, the recognition system 10 is used for obtaining data of an image showing the target object 100 from an imaging system 200, providing a result of recognition of the target object 100 shown in the image to a control system 300, and allowing the control system 300 to perform an operation in accordance with the result of the recognition.

The target object 100 is a visible object to be subject to recognition by the recognition system 10. In the present embodiment, the target object 100 may be a human being. The target object 100 is not limited to human beings, but, may be living things other than human beings, such as animals. The target object 100 is not limited to living things, but may be inanimate things. Examples of the inanimate things may include movable objects including vehicles such as bicycles, automobiles, ships, or aircrafts, or drones. The target object 100 is not limited to whole of an object, but may be part of an object.

The imaging system 200 is a system for generating data of an image of the target object 100. In the present embodiment, the expression "showing the target object 100" may mean showing not whole but at least part of the target object 100. For example, when the target object 100 is a human being, an image showing a face of a human being may mean an image showing the target object 100. The imaging system 200 is communicably connected to the recognition system 10 and thus can provide data of an image showing the target object 100 to the recognition system 10. The imaging system 200 includes one or more cameras (digital cameras).

The control system 300 is a system functioning to perform operations according to a result of recognition of the target object 100. In one example, the control system 300 may be used to control doors in facility such as factories, stores, office buildings (entire building, or floors). The control system 300 can unlock doors when a result of recognition of the target object 100 indicates that the target object 100 is a person with permission to pass through the doors. In another example, the control system 300 may be used to control operations (actions) of robots. The control system 300 can determine an operation of a robot in accordance with a result of recognition of the target object 100. The control system 300 is communicably connected to the recognition system 10 and thus can receive a result of recognition of the target object 100 from the recognition system 10. The control system 300 includes a computer system including one or more memories and one or more processors.

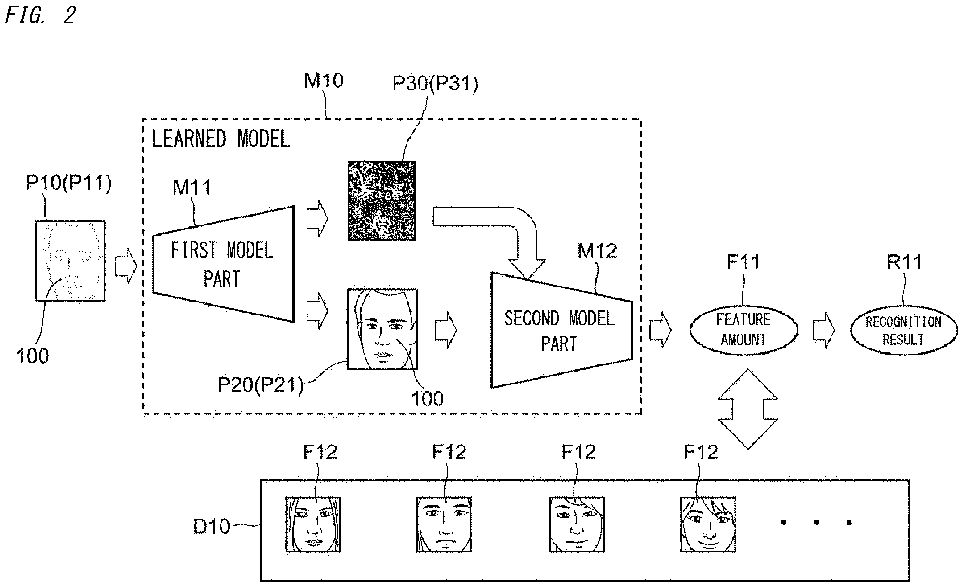

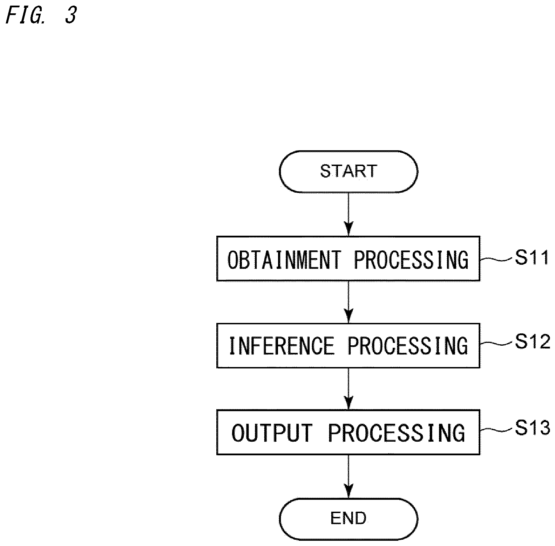

As shown in FIG. 1, the recognition system 10 includes a storage device 12 for storing a learned model M10, and an arithmetic circuit 13 accessible to the storage device 12. As shown in FIG. 2, the learned model M10 includes a first model part M11 and a second model part M12. The first model part M11 is a model learned to, in response to input of a first resolution image P10 showing a target object 100 at a first resolution, output a second resolution image P20 and a difference image P30. The second resolution image P20 corresponds to an image resulting from conversion of the first resolution image P10 into a second resolution higher than the first resolution. The difference image P30 corresponds to a difference between the first resolution image P10 and the second resolution image P20. The second model part M12 is a model learned to output a feature amount F11 of the target object 100 in response to input of the second resolution image P20 and the difference image P30. As shown in FIG. 3, the arithmetic circuit 13 is configured to perform obtainment processing S11 of obtaining the first resolution image P10 as a target image, and inference processing S12 of providing the target image obtained by the obtainment processing S11 to the learned model M10 to allow the learned model M10 to calculate a feature amount F12 of a target object 100 shown in the target image.

As described above, to extract the feature amount F11 of the target object 100 from the first resolution image P10 showing the target object 100, the recognition system 10 uses the second resolution image P20 with its resolution higher than that of the first resolution image P10, together with the difference image P30. The resolution of the second resolution image P20 is higher than the resolution of the first resolution image P10. Therefore, the second resolution image P20 can be considered as an image obtained by photographing the same target object 100 as the first resolution image P10 from a close r position than the first resolution image P10. It is obvious from experiences that an image obtained by photographing the target object 100 from a closer position can expectedly improve accuracy of recognition of the target object 100. From this point of view, it is considered that information lost by an increase in a distance to the target object 100 may cause large effect on accuracy of recognition of the target object 100. For example, the first resolution image P10 and the second resolution image P20 are images of a human face, examples of the information lost by an increase in a distance to the target object 100 may include detail information on parts of faces such as eyes, noses, mouths. Whilst, it is considered that information on a contour of a face may be retained in both the first resolution image P10 and the second resolution image P20. The difference image P30 is an image corresponding to a difference between the first resolution image P10 and the second resolution image P20 and thus seems to represent information lost from the second resolution image P20 due to an increase in a distance to the target object 100. The learned model M10 used by the recognition system 10 uses the difference image P30 together with the second high resolution image P20 to extract the feature amount F11 of the target object 100 from the first resolution image P10 showing the target object 100. Accordingly, the recognition system 10 can improve accuracy of recognition of the target object 100.

### (1-2) DETAILS

### (1-2-1) RECOGNITION SYSTEM

Hereinafter, the recognition system 10 will be described in detail. As shown in FIG. 1, the recognition system 10 includes an interface 11, the storage device 12, and the arithmetic circuit 13. In the present embodiment, the recognition system 10 can be realized by a single server.

The interface 11 is used for inputting information to the recognition system 10 and outputting information from the recognition system 10. The interface 11 includes an input output device 111 and a communication device 112. The input output device 111 functions as an input device for inputting information from users and an output device for outputting information to users. The input output device 111 includes one or more human machine interfaces. Examples of the human machine interfaces may include input devices such as keyboards, pointing devices (e.g., a mouse, a trackball mouse), or touch pads, output devices such as displays, loudspeakers, or input output devices such as touch panels. The communication device 112 is communicably connected to external devices or systems. In the present embodiment, the communication device 112 is used for communication with the imaging system 200 and the control system 300 via communication network(s). The communication device 112 includes one or more communication interfaces. The communication device 112 is connectable to communication network(s) and has functionality to perform communication via the communication network(s). The communication device 112 complies with a predetermined communication protocol. The predetermined communication protocol may be selected from one or more of known various wired and wireless communication standards.

The storage device 12 is used for storing information used by the arithmetic circuit 13 and information generated by the arithmetic circuit 13. The storage device 12 includes one or more storages (non-transitory storage media). The storages may be selected from one or more of hard disk drives, optical drives, or solid state drives (SSD). Further, the storages may be any one of an internal type, an external type or a NAS (network-attached storage) type.

Information to be stored in the storage device 12 includes the learned model M10 and a database D10. FIG. 1 shows that the storage device 12 stores all of the learned model M10 and the database D10. However, the learned model M10 and the database D10 always need not be stored in the storage device 12 but may be stored in the storage device 12 when the arithmetic circuit 13 requires them.

The learned model M10 is used for recognition of the target object 100 by the recognition system 10. As shown in FIG. 2, the learned model M10 is learned to, in response to input of the first resolution image P10, output the feature amount F11 of the target object 100 shown in the first resolution image P10. The learned model M10 includes the first model part M11 and the second model part M12.

The first model part M11 is a model (learned or trained model) learned to, in response to input of the first resolution image P10, output the second resolution image P20 and the difference image P30. The first resolution image P10 is an image showing the target object 100 at a first resolution. In the present embodiment, the target object 100 is a human being. The first resolution image P10 is assumed to an image showing feature part of not whole but part of the target object 100. The feature part is part which can contribute to recognition of the target object 100 and in the present embodiment is assumed to a face of the target object 100. The second resolution image P20 corresponds to an image resulting from conversion of the first resolution image P10 into a second resolution higher than the first resolution. This means that, regardless of how to obtain the second resolution image P20, the second resolution image P20 has the same or substantially same content as an image obtained by conversion of the first resolution image P10 into the second resolution higher than the first resolution. In another expression, the second resolution image P20 is considered as an image which shows the target object 100 with the same composition as the first resolution image P10 at a higher resolution than the first resolution image P10. Thus, the second resolution image P20 is an image showing the target object 100 with the same composition as the first resolution image P10 at the second resolution higher than the first resolution. In other words, the first resolution image P10 corresponds to an image resulting from conversion of the second resolution image P20 into the first resolution lower than the second resolution. This means that, regardless of how to obtain the first resolution image P10, the first resolution image P10 has the same or substantially same content as an image obtained by conversion of the second resolution image P20 into the first resolution lower than the second resolution. In another expression, the first resolution image P10 is considered as an image which shows the target object 100 with the same composition as the second resolution image P20 at a lower resolution than the second resolution image P20. Thus, the first resolution image P10 is an image showing the target object 100 with the same composition as the second resolution image P20 at the first resolution lower than the second resolution. In a relationship between the first resolution image P10 and the second resolution image P20, the first resolution image P10 is a low resolution image of the target object 100 and the second resolution image P20 is a high resolution image of the target object 100. For example, the first resolution has 22 by 26 pixels and the second resolution has 112 by 96 pixels. The difference image P30 corresponds to a difference between the first resolution image P10 and the second resolution image P20. The first resolution image P10 and the second resolution image P20 are images showing the target object 100 with the same composition at different resolutions. Therefore, the difference image P30 is considered to be an image indicating a difference in visual appearance of the target object 100 caused by a difference in resolution between the first resolution image P10 and the second resolution image P20. The difference in the resolution may be considered as a difference in a distance to the target object 100. Accordingly, the difference image P30 is considered to represent information of the first resolution image P10 but lost from the second resolution image P20 due to an increase in a distance to the target object 100. As described in detail later, the first model part M11 can be obtained from a learned model generated by conducting machine learning (supervised learning) using a learning dataset including the first resolution image P10 as input and a set of the second resolution image P20 and the difference image P30 as ground truth, by use of a model with a neural network architecture. In the present embodiment, the first model part M11 outputs the second resolution image P20 with a resolution higher than that of the first resolution image P10 and therefore is considered as a super-resolution network.

The second model part M12 is a model (learned model) learned to, in response to input of the second resolution image P20 and the difference image P30, output the feature amount F11 of the target object 100. The feature amount F11 of the target object 100 is information used for recognition (identification) of the target object 100 by the arithmetic circuit 13. The feature amount F11 is, for example, represented by an n-dimensional vector (n is an arbitrary integer). As described in detail later, the second model part M12 can be obtained from a learned model generated by conducting machine learning (supervised learning) using a learning dataset including a set of the second resolution image P20 and the difference image P30 as input and a result of recognition of the target object 100 as ground truth, by use of a model with a neural network architecture. In the present embodiment, the first resolution image P10 and the second resolution image P200 are images showing a face of the target object 100 and thus the second model part M12 is considered to be a face recognition network.

In the learned model M10, output of the first model part M11 is connected to input of the second model part M12. Accordingly, the second resolution image P20 and the difference image P30 which are output from the first model part M11 in response to the first resolution image P10 are input into the second model part M12, and the feature amount F11 is output from the second model part M12.

The learned model M10 described above is generated by a learning system 20 described below. A generation method (learning method) of the learned model M10 will be described in detail in the following chapter "(1-2-2) LEARNING METHOD".

The database D10 is a database in relation to the target object 100 to be recognized (identified) by the recognition system 10. The database includes a correspondence relation between identification information of the target object 100 and a matching feature amount F12, for each target object 100 to be recognized by the recognition system 10. The identification information includes an identification number assigned to the target object 100. The matching feature amount F12 is used for matching with the feature amount F11 obtained by the learned model M10. In the present embodiment, the target object 100 is a human being, and in the database D10, for example, in a case of a person A, the identification information is the identification information of the person A, and the feature amount F12 corresponds to the feature amount F11 obtained from an image showing the person A by the learned model M10. The feature amount F12 is, for example, a vector with the same dimension as the feature amount F11.

The arithmetic circuit 13 is circuitry for controlling operations of the recognition system 10. The arithmetic circuit 13 is connected to the interface 11 and is accessible to the storage device 12 (that is, accessible to the learned model M10 and the database D10). The arithmetic circuit 13 can be realized by a computer system including one or more processors (microprocessors) and one or more memories, for example. The one or more processors realizes functions as the arithmetic circuit 13 by executing program(s) (stored in the one or more memories or the storage device 12). The program(s) herein may be stored in the storage device 12 in advance but can be provided through telecommunication circuit such as the Internet or as in form of stored in a non-transitory storage medium such as a memory card.

The arithmetic circuit 13 is configured to perform the obtainment processing S11, the inference processing S12, and output processing S13 (see FIG. 3).

The obtainment processing S11 is processing of obtaining the first resolution image P10 as a target image. In the present embodiment, the obtainment processing S11 obtains the first resolution image P10 as the target image indirectly. The recognition system 10 is connected to the imaging system 200 via the interface 11. The obtainment processing S11 extracts the first resolution image P10 from an image obtained from the imaging system 200 via the interface 11, and obtains it as the target image. Concretely, the obtainment processing S11 extracts, from an image from the imaging system 200, a region showing the target object 100, as the target image (the first resolution image P10). In the present embodiment, the first resolution image P10 is an image of the face of the target object 100 and thus the obtainment processing S11 extracts an image of the face of the target object 100 from the image from the imaging system 200. The obtainment processing S11 can obtain the first resolution image P10 as the target image directly. For example, when the first resolution image P10 is given to the recognition system 10 from the imaging system 200 via the interface 11, the obtainment processing S11 can obtain the given first resolution image P10 as the target image without any modification.

The inference processing S12 is processing of providing the target image obtained by the obtainment processing S11 to the learned model M10 to allow the learned model M10 to calculate the feature amount F11 of the target object 100 shown in the target image. Especially, in the present embodiment, the inference processing S12 includes recognizing the target object based on the feature amount F11 of the target object 100 shown in the target image. In more detail, the inference processing S12 calculates a matching degree (similarity) between the feature amount F11 the feature amount F12 by comparing the feature amount F11 of the target object 100 shown in the target image with the feature amount F12 of the database D10 of the storage device 12, and then performs recognition of the target object 100 shown in the target image based on the similarity. In the present embodiment, since the feature amount F11 and the feature amount F12 are n-dimensional vectors, the matching degree between the feature amount F11 and the feature amount F12 can be evaluated by cosine similarity, Euclidean distance, or the like. As one example, the inference processing S12 recognizes the target object 100 associated with the feature amount F12 which is the highest in the matching degree with the feature amount F11 among a plurality of feature amounts F12 and has its matching degree equal to or higher than a threshold, as the target object 100 shown in the target image.

The output processing S13 is processing of outputting a result of the inference processing S12. In the present embodiment, the result of the inference processing S12 includes a recognition result R21 of the target object 100 shown in the target image. The recognition system 10 is connected to the control system 300 via the communication device of the interface 11. The output processing S13 outputs the result of the inference processing S12 to the control system 300 via the interface 11. Additionally, the output processing S13 can output the result of the inference processing S12 to users via the input output device of the interface 11. For example, the output processing S13 can present a screen for outputting the result of the inference processing S12 by use of the input output device of the interface 11.

As described above, the recognition system 10 includes: the storage device 12 for storing the learned model M10; and the arithmetic circuit 13 accessible to the storage device 12. The learned model M10 includes the first model part M11 and the second model part M12. The first model part M11 is a model learned to, in response to input of the first resolution image P10 showing the target object 100 at the first resolution, output the second resolution image P20 and the difference image P30. The second resolution image P20 is corresponding to an image resulting from conversion of the first resolution image P10 into the second resolution higher than the first resolution. The difference image P30 is corresponding to a difference between the first resolution image P10 and the second resolution image P20. The second model part M12 is a model learned to output the feature amount F11 of the target object 100 in response to input of the second resolution image P20 and the difference image P30 from the first model part M11. As shown in FIG. 3, the arithmetic circuit 13 is configured to perform: the obtainment processing S11 of obtaining the first resolution image P10 as the target image; and the inference processing S12 of providing the target image obtained by the obtainment processing S11 to the learned model M10 to allow the learned model M10 to calculate the feature amount F11 of the target object 100 shown in the target image. Accordingly, the recognition system 10 enables improvement of accuracy of recognition of the target object 100.

In other words, the recognition system 10 is considered to perform the following method (recognition method). The recognition method is performed by the arithmetic circuit 13 accessible to the storage device 12 and includes the obtainment processing S11 and the inference processing S12. Accordingly, similarly to the recognition system 10, the recognition method enables improvement of accuracy of recognition of the target object 100.

The recognition system 10 can be realized by use of the arithmetic circuit 13. Therefore, the method (recognition method) performed by the recognition system 10 can be realized by the arithmetic circuit 13 performing a program. This program is a computer program allowing the arithmetic circuit 13 to perform the above recognition method. Accordingly, similarly to the recognition system 10, the program enables improvement of accuracy of recognition of the target object 100.

The learned model M10 used in the recognition system 10 includes the first model part M11 and the second model part M12. The first model part M11 is a model learned to, in response to input of the first resolution image P10 showing the target object 100 at the first resolution, output the second resolution image P20 and the difference image P30. The second resolution image P20 is corresponding to an image resulting from conversion of the first resolution image P10 into the second resolution higher than the first resolution. The difference image P30 is corresponding to a difference between the first resolution image P10 and the second resolution image P20. The second model part M12 is a model learned to output the feature amount F11 of the target object 100 in response to input of the second resolution image P20 and the difference image P30 from the first model part M11. Accordingly, the learned model M10 enables improvement of accuracy of recognition of the target object 100.

### (1-2-2) LEARNING METHOD

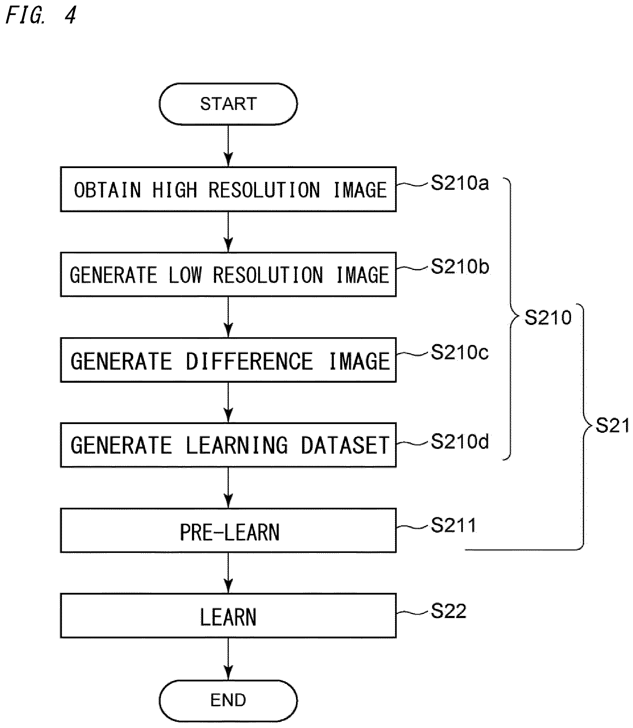

Hereinafter, a learning method for generating the learned model M10 used in the recognition system 10 will be described. As shown in FIG. 4, the learning method includes a preparation step S21 and a learning step S22.

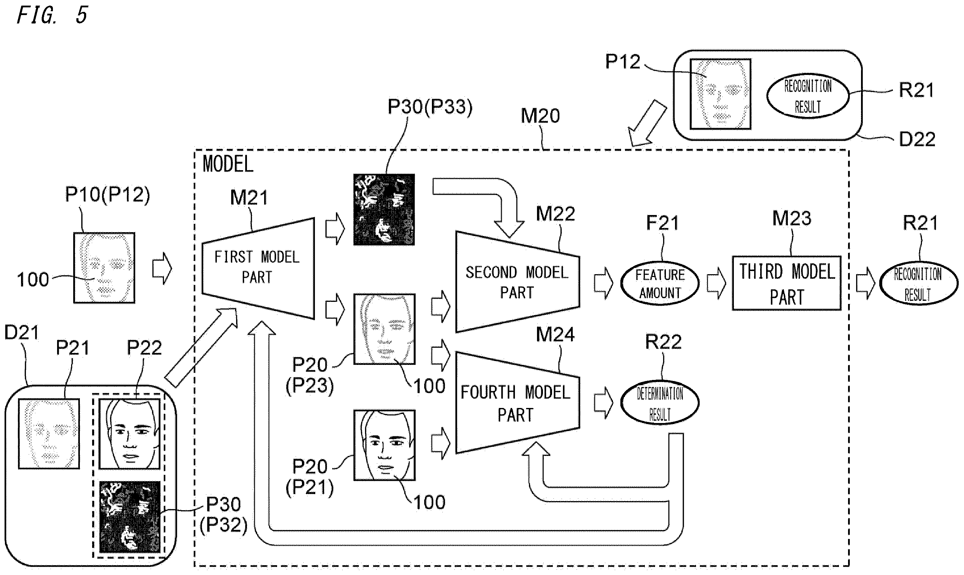

The preparation step S21 is processing of preparing a model M20 as shown in FIG. 5. The model M20 is used for generating the learned model M10. The model M20 includes a first model part M21, a second model part M22, a third model part M23, and a fourth model part M24.

The first model part M21 is a model for, in response to input of the first resolution image P10 showing the target object 100 at the first resolution, outputting the second resolution image P20 and the difference image P30. The second resolution image P20 corresponds to an image resulting from conversion of the first resolution image P10 into the second resolution higher than the first resolution. The difference image P30 corresponds to a difference between the first resolution image P10 and the second resolution image P20. The first model part M21 has an architecture of a neural network, in the present embodiment, an architecture of a convolutional neural network (CNN). The convolutional neural network includes appropriate numbers of layers including convolution layers, pooling layers, activation function, and full connected layers between an input layer and an output layer. Especially, the first model part M21 includes an architecture for generating a super-resolution network like the first model part M11 of the learned model M10. For example, as the architecture of the first model part M21, a generation network presented in FIG. 4 of a reference document (Christian Ledig, et al., "Photo-Realistic Single Image Super-Resolution Using a Generative Adversarial Network", [online], 2016, September 15, [Accessed 2020, September 7], Cornell University, Internet <URL: https://arxiv.org/abs/1609.04802>) is available.

The second model part M22 is a model for outputting the feature amount F11 of the target object 100 in response to input of the second resolution image P20 and the difference image P30 from the first model part M21. The second model part M22 has an architecture of a neural network, in the present embodiment, an architecture of a convolutional neural network (CNN). Especially, the second model part M22 includes an architecture for generating a face recognition network like the second model part M12 of the learned model M10. For example, as the architecture of the second model part M22, the face recognition network described in non patent literature 1 can be available. In the present embodiment, the second resolution image P20 is input into the input layer of the second model part M22 but the difference image P30 is not input into the input layer of the second model part M22. The difference image P30 is converted into parameters through convolution layers different from the input layer of the second model part M22 and then used in the second model part M22. Examples of such parameters may include parameters (e.g., γ, β used in batch normalization) for converting normalized data of an image input into the input layer at unique scale and shift. For example, a reference document (Taesung Park, et al., "Semantic Image Synthesis with Spatially-Adaptive Normalization", [online], 2019, March 18, [Accessed 2020, September 7), Cornell University, Internet <URL: https://arxiv.org/abs/1903.07291) discloses using a tensor obtained by convolution of a segmentation mask via convolution layers as parameters γ, β of batch normalization.

The third model part M23 is a model for outputting a result (recognition result) R21 of recognition of the target object 100 in response to input of the feature amount F11 of the target object 100 from the second model part M22. The third model part M23 is an identifier and, for example, algorithms such as K nearest neighbor (KNN), a support vector machine (SVM) can be available.

The fourth model part M24 is a model for outputting a result (determination result) R22 of determination of whether or not the second resolution image P20 is an image generated by the first model part M21, in response to input of the second resolution image P20. The fourth model part M24 has an architecture of a neural network, in the present embodiment, an architecture of a convolutional neural network (CNN). The fourth model part M24 has an architecture for generating an identification network. The fourth model part M24 is used to constitute a generative adversarial network (GAN) together with the first model part M21. As the architecture of the fourth model part M24, the identification network presented in FIG. 4 of the above reference document can be available.

As shown in FIG. 4, the preparation step S21 includes a generation step S210 and a pre-learning step S211.

The generation step S210 is a step of generating a learning dataset (first learning dataset) D21. The first learning dataset D21 is a learning (training) dataset including the first resolution image P10 as input and a set of the second resolution image P20 and the difference image P30 as ground truth. In other words, the generation step S210 means a learning dataset generation method for generating the learning dataset D21.

As shown in FIG. 4, the generation step S210 includes a first step S210a, a second step S210b, a third step S210c, and a fourth step S210d.

The first step S210a is a step of obtaining a reference image showing the target object 100. The reference image is an image showing the target object 100 at the second resolution. In other words, the first step S210a is considered to be a step of obtaining the second resolution image P20. However, the reference image is not an image resulting from conversion of the first resolution image P10 into the second resolution higher than the first resolution but is assumed to be an image obtained by photographing the target object 100 at the second resolution or an image resulting from conversion of an image obtained by photographing the target object 100 at a third resolution higher than the second resolution, from the third resolution to the second resolution. Hereinafter, if necessary, the second resolution image P20 obtained by the first model part M11 of the learned model M10 is designated by a reference sign P21. The second resolution image P20 obtained by the first step S210a is designated by a reference sign P22. The second resolution image P20 obtained by the first model part M"1 of the model M20 is designated by a reference sign P23.

The second step S210b is a step of converting the reference image (the second resolution image P22) into a low resolution image at a resolution lower than that of the reference image. In the present embodiment, the reference image is converted into a low resolution image with the first resolution lower than the second resolution. In other words, the second step S210b is considered to be a step of generating the first resolution image P10 by converting the second resolution image P22 obtained by the first step S210a into an image at the first resolution. In this regard, the low resolution image is neither an image obtained by photographing the target object 100 at the first resolution, nor, an image resulting from conversion of an image obtained by photographing the target object 100 at a fourth resolution lower than the first resolution, from the fourth resolution to the first resolution, but is assumed to be an image resulting from conversion of the second resolution image P22 into the first resolution lower than the second resolution. Hereinafter, to distinguish the first resolution image P10 being a low resolution image generated from the second resolution image P22 and the first resolution image P10 being an image obtained by photographing the target object 100 at the first resolution and the like, from each other, the latter is designated by a reference sign P11 and the former is designated by reference sign P12, if necessary. The second step S210b generates the first resolution image (the low resolution image) P12 which is smaller in image size than the second resolution image (the reference image) P22 obtained by the first step S210a. Such conversion from the second resolution image P22 to the first resolution image P12 can be realized by known methods such as mean imputation.

The third step S210c is a step of generating the difference image P30 corresponding to a difference between the reference image (the second resolution image P22) and the low resolution image (the first resolution image P12). The third step S210c is assumed to be a step of generating the difference image P30 from the second resolution image P22 obtained by the first step S210a and the first resolution image P12 generated by the second step S210b. The third step S210c enlarges the first resolution image P12 generated by the second step S210b to a size same as the second resolution image P22 obtained by the first step S210a. The third step S210c generates the difference image P30 based on differences of pixels between the first resolution image P12 enlarged and the second resolution image P22 obtained by the first step S210a. Accordingly, it is possible to easily calculate the differences of pixels between the first resolution image P12 and the second resolution image P22. Enlargement of the first resolution image P12 can be realized by known methods such as bicubic interpolation. A range of each pixel in the difference image P30 is narrower than a range of each pixel of the first resolution image P12 and the second resolution image P22. For example, when the range of each pixel of the first resolution image P12 and the second resolution image P22 is 0 to 255, the range of each pixel in the difference image P30 may be set to 0 to 15. Accordingly, the third step S210c generates the difference image P30 by lowering gradation of the image representing, without any modification, the difference between the enlarged first resolution image P12 and the second resolution image P22 obtained by the first step S210a. Thus, the difference image P30 may clearly reflect part corresponding to a meaningful difference between the first resolution image P12 and the second resolution image P22. Hereinafter, if necessary, the difference image P30 obtained by the first model part M11 of the learned model M10 is designated by a reference sign P31. The difference image P30 generated by the third step S210c is designated by a reference sign P32. The difference image P30 obtained by the first model part M21 of the model M20 is designated by a reference sign P33.

The fourth step S210d is a step of generating the (first) learning dataset D21. The first learning dataset D21 is a learning (training) dataset including the low resolution image (the first resolution image P12) as input and a set of the reference image (the second resolution image P22) and the difference image P32 as ground truth. In other words, the fourth step S210d is considered to be a step of generating a learning dataset including the first resolution image P12 generated by the second step S210b as input and a set of the second resolution image P22 obtained by the first step S210a and the difference image P32 generated by the third step S210c as ground truth.

The pre-learning step S211 trains the first model part M21 to learn a relationship between the first resolution image P10 (P12) and a set of the second resolution image P20 (P22) and the difference image P30 (P32), by using the leaning dataset D21 generated by the generation step S210. As a result, the first model part M21 is trained or learned to, in response to input of the first resolution image P10 (P12), output the second resolution image P23 and the difference image P33. The pre-learning step S211 may include pre-learning of the second model part M22 and the third model part M23, if necessary. By use of a learning dataset including a set of the second resolution image P20 and the difference image P30 as input and the recognition result R21 as ground truth, the second model part M22 and the third model part M23 may be trained to learn a relation between the set of the second resolution image P20 and the difference image P30 and the recognition result R21. When pre-learned models are used as the second model part M22 and the third model part M23, pre-learning of the second model part M22 and the third model part M23 at the pre-learning step S211 is unnecessary. The pre-learning step S211 may include pre-learning of the fourth model part M24, if necessary. For example, the fourth model part M24 may be trained to some extent by use of the second resolution image P22 obtained by the first step S210a and the second resolution image P23 generated by the first model part M21. When a pre-learned model is used as the fourth model part M24, pre-learning of the fourth model part M24 at the pre-learning step S211 is unnecessary.

The learning step S22 includes training the model M20 to learn a relationship between the first resolution image P12 and a feature amount F21 of a target object 100 shown in the first resolution image P12, by machine learning using a (second) learning dataset D22. The second learning dataset D22 is a learning (training) dataset which includes the first resolution image P12 as input and a result (recognition result R21) of recognition of the target object 100 shown in the first resolution image P12 as ground truth. The learning step S22 may include perform additional learning of at least one of the first model part M21 and the fourth model part M24 based on a result (determination result) R22 of determination output from the fourth model part M24.

It is possible to obtain learned (trained) parameters of the first model part M21 and the second model part M22 from the model M20 subject to machine learning as described above. Use of the learned parameters of the first model part M21 and the second model part M22 as well as inference programs of the first model part M21 and the second model part M22 enables implementation of the learned model M10 shown in FIG. 2.

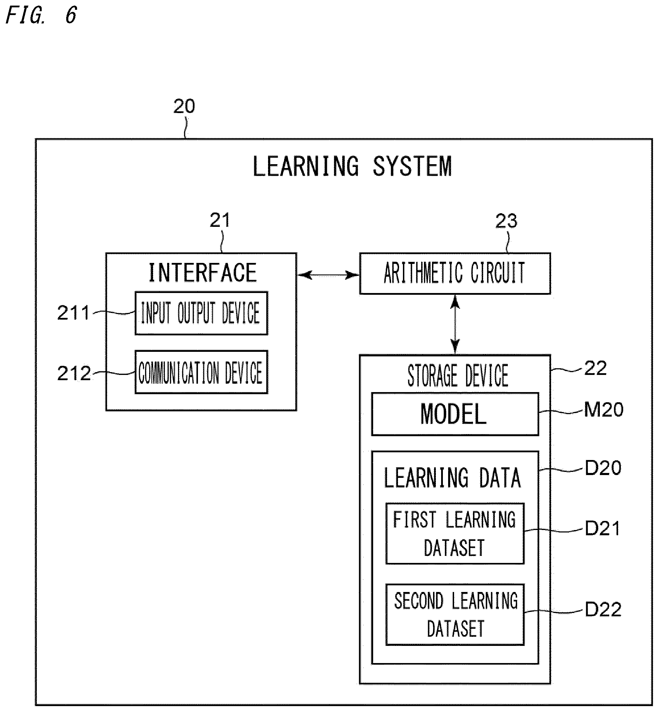

The learning method described above can be performed by the learning system 20 shown in FIG. 6, for example. The learning system 20 includes an interface 21, a storage device 22, and an arithmetic circuit 23. In the present embodiment, the learning system 20 can be realized by a single server.

The interface 21 is used for inputting information to the learning system 20 and outputting information from the learning system 20. The interface 21 includes an input output device 211 and a communication device 212. The input output device 211 functions as an input device for inputting information from users and an output device for outputting information to users. The input output device 211 includes one or more human machine interfaces. Examples of the human machine interfaces may include input devices such as keyboards, pointing devices (e.g., a mouse, a trackball mouse), or touch pads, output devices such as displays, loudspeakers, or input output devices such as touch panels. The communication device 212 is communicably connected to external devices or systems. The communication device 212 includes one or more communication interfaces. The communication device 212 is connectable to communication network(s) and has functionality to perform communication via the communication network(s). The communication device 212 complies with a predetermined communication protocol. The predetermined communication protocol may be selected from one or more of known various wired and wireless communication standards.

The storage device 22 is used for storing information used by the arithmetic circuit 23 and information generated by the arithmetic circuit 23. The storage device 22 includes one or more storages (non-transitory storage media). The storages may be selected from one or more of hard disk drives, optical drives, or solid state drives (SSD). Further, the storages may be any one of an internal type, an external type or a NAS (network-attached storage) type.

Information to be stored in the storage device 22 includes the model M20 and learning (training) data D20. The learning data D20 includes the first learning dataset D21 and the second learning dataset D22. FIG. 6 shows that the storage device 22 stores all of the model M20 and the learning data D20. However, the model M20 and the learning data D20 always need not be stored in the storage device 22 but may be stored in the storage device 22 when the arithmetic circuit 23 requires them.

The arithmetic circuit 23 is circuitry for controlling operations of the learning system 20. The arithmetic circuit 23 is connected to the interface 21 and is accessible to the storage device 22 (that is, accessible to the model M10 and the learning data D20). The arithmetic circuit 23 can be realized by a computer system including one or more processors (microprocessors) and one or more memories, for example. The one or more processors realizes functions as the arithmetic circuit 23 by executing program(s) (stored in the one or more memories or the storage device 22). The program(s) herein may be stored in the storage device 22 in advance but can be provided through telecommunication circuit such as the Internet or as in form of stored in a non-transitory storage medium such as a memory card.

The arithmetic circuit 23 is configured to perform the learning method (including the preparation step S21 and the learning step S22).

As described above, the learning system 20 includes the arithmetic circuit 23. The arithmetic circuit 23 performs the learning method including the preparation step S21 of preparing the model M20 and the learning step S22 of performing machine learning using the model M20 prepared by the preparation step S21. The model M20 includes the first model part M21, the second model part M22, and the third model part M23. The first model part M21 is a model for, in response to input of the first resolution image P10 showing the target object 100 at the first resolution, outputting the second resolution image P20 and the difference image P30. The second resolution image P20 corresponds to an image resulting from conversion of the first resolution image P10 into the second resolution higher than the first resolution. The difference image P30 corresponds to a difference between the first resolution image P10 and the second resolution image P20. The second model part M21 is a model for outputting the feature amount F21 of the target object 100 in response to input of the second resolution image P20 and the difference image P30 from the first model part M21. The third model part M23 is a model for outputting the result R21 of recognition of the target object 100 in response to input of the feature amount F21 of the target object 100 from the second model part M22. The learning step S22 includes training the model M20 to learn a relationship between the first resolution image P10 and the feature amount F21 of the target object 100 shown in the first resolution image P10, by machine learning using the learning dataset D21 which includes the first resolution image P10 as input and the result R21 of recognition of the target object 100 shown in the first resolution image P10 as ground truth. Accordingly, the learning system 20 enables improvement of accuracy of recognition of the target object 100.

In other words, the learning system 20 is considered to perform the following method (learning method). The learning method is performed by the arithmetic circuit 23 and includes the preparation step S21 and the learning step S22. Accordingly, similarly to the learning system 20, the learning method enables improvement of accuracy of recognition of the target object 100.

The learning system 20 is realized by use of the arithmetic circuit 23. Therefore, the method (learning method) performed by the learning system 20 can be realized by the arithmetic circuit 23 performing a program. This program is a computer program allowing the arithmetic circuit 23 to perform the above learning method. Accordingly, similarly to the learning system 20, the program enables improvement of accuracy of recognition of the target object 100.

### (1-3) PERFORMANCE EVALUATION

A test for evaluating the performance of face recognition of the learned model M10 was conducted. In the test, to conduct relative evaluation of the performance of face recognition of the learned model M10, evaluation was made to the performance of face recognition of a learned model which corresponds to the learned model M10 shown in FIG. 2 with the difference image P30 being omitted. This learned model where the difference image P30 is omitted corresponds to the learned model of non patent literature 1. As data for evaluation of the performance of face recognition, the LFW dataset (http://vis-www.cs.umass.edu/lfw/) which is one of open benchmarks for face recognition was used as data. Accuracy rates were evaluated by use of total 6000 pairs including 3000 pairs of different types of images of the same person and 3000 pairs of images of different persons. The accuracy rate of the learned model of non patent literature 1 is 98.64% while the accuracy rate of the learned model M10 is 98.82%. This indicates that the learned model M10 can improve an error rate by about 10%.

### (2) VARIATIONS

Embodiments of the present disclosure are not limited to the above embodiment. The above embodiment may be modified in various ways in accordance with designs or the like to an extent that they can achieve the problem of the present disclosure. Hereinafter, variations or modifications of the above embodiment will be listed. One or more of the variations or modifications described below may apply in combination with one or more of the others.

In one variation, in the recognition system 10, the arithmetic circuit 13 performs additional learning of the learned model M10 to generate a reuse model, and performs the inference processing S12 using the reuse model. In other words, the arithmetic circuit 13 may perform learning processing performing additional learning (relearning) of the learned model M10.

In one variation, in the recognition system 10, the storage device 12 may store a distillation model instead of the learned model M10. The distillation model is a model generated by distillation of the learned model M10. In this case, the recognition system 10 includes the storage device 12 for storing the distillation model, and the arithmetic circuit 13 accessible to the storage device 12. The arithmetic circuit 13 is configured to perform the obtainment processing S11 and the inference processing S12. The obtainment processing 311 is processing of obtaining the first resolution image P10 as the target image. The inference processing S12 is processing of providing the target image obtained by the obtainment processing S11 to the distillation model to allow the distillation model to calculate the feature amount F11 of the target object shown in the target image. Also in this case, accuracy of recognition of the target object 100 can be improved.

In one variation, in the recognition system 10, the obtainment processing S11 may for example present a screen for inputting the first resolution image P10 by the input output device of the interface 11, and a user can input the first resolution image P10 in accordance with instructions on the screen. The input of the first resolution image P10 may include, in addition to inputting the first resolution image P10 into the recognition system 10 from external devices or systems, identifying data to be used as the first resolution image P10 from data stored in the recognition system 10. It is not always necessary for the inference processing S12 to calculate the recognition result R11. The feature amount F11 may be used as the result of the inference processing. The output processing S13, for example, may present a screen for outputting the result of the inference processing by the input output device of the interface 11.

In one variation, in the learning method, the second resolution image P23 and the difference image P33 from the first model part M21 of the model M20 may be input into (the input layer of) the second model part M22 as two channel images. In this case, the second resolution image P21 and the difference image P31 from the first model part M11 of the learned model M10 may be input into (the input layer of) the second model part M12 as two channel images.

In one variation, the difference image P30 may be an image each pixel values of which is just equal to a difference between pixels of the first resolution image P10 and the second resolution image P20.

In one variation, the preparation step S21 is optional since the learning dataset D21 may be prepared in advance. In the learning step S22, instead of end-to-end learning of the model M20, respective learning processes of the first model part M21 to the fourth model part M24 of the model M20 may be performed. The model M20 may not include the fourth model part M24. This means learning using GAN being optional.

In one variation, it is not always necessary to implement the recognition system 10 and the learning system 20 by respective different computer systems. The recognition system 10 and the learning system 20 may be realized by a single computer system.

In one variation, each the interface 11 of the recognition system 10 and the interface 21 of the learning system 20 may not include the input output device and the communication device both.

In one variation, each of the recognition system 10 and the learning system 20 may be implanted by a computer system such as multiple servers. In other words, it is not always necessary that multiple functions (components) in each of the recognition system 10 and the learning system 20 are accommodated in a single housing or casing. The multiple components of each of the recognition system 10 and the learning system 20 may be distributed to multiple housing or casing. Further, at least one of functions of each of the recognition system 10 and the learning system 20, for example, one of function of the arithmetic circuit 13 or 23 may be implemented by a cloud (cloud computing).

### (3) ASPECTS

As apparent from the above embodiment and variations, the present disclosure includes the following aspects. Hereinafter, reference signs in parenthesis are attached for the purpose of clearly showing correspondence with the embodiments only.

A first aspect is a recognition system (10) and includes: a storage device (12) for storing a learned model (M10); and an arithmetic circuit (13) accessible to the storage device (12). The learned model (M10) includes a first model part (M11) and a second model part (M12). The first model part (M11) is a model learned to, in response to input of a first resolution image (P10), output a second resolution image (P20) and a difference image (P30). The first resolution image (P10) is an image showing a target object (100) at a first resolution. The second resolution image (P20) corresponds to an image resulting from conversion of the first resolution image (P10) into a second resolution higher than the first resolution. The difference image (P30) corresponds to a difference between the first resolution image (P10) and the second resolution image (P20). The second model part (M12) is a model learned to output a feature amount (F11) of the target object (100) in response to input of the second resolution image (P20) and the difference image (P30). The arithmetic circuit (13) is configured to perform: obtainment processing (S11); and inference processing (S12). The obtainment processing (S11) is processing of obtaining the first resolution image (P10) as a target image. The inference processing (S12) is processing of providing the target image obtained by the obtainment processing (S11) to the learned model (M10) to allow the learned model (M10) to calculate a feature amount (F11) of a target object (100) shown in the target image. This aspect can improve accuracy of recognition of the target object (100).

A second aspect is a recognition system (10) based on the first aspect. In the second aspect, the inference processing (S12) includes recognizing the target object based on a feature amount (F11) of a target object shown in the target image. This aspect can improve accuracy of recognition of the target object (100).

A third aspect is a recognition system (10) based on the first or second aspect. In the third aspect, the arithmetic circuit (13) is configured to execute output processing (S13) of outputting a result of the inference processing (S12). This aspect can present the result of the inference processing (S12).

A fourth aspect is a recognition method performed by an arithmetic circuit (13) accessible to a storage device (12) for storing a learned model (M10). The learned model (M10) includes a first model part (M11) and a second model part (M12). The first model part (M11) is a model learned to, in response to input of a first resolution image (P10), output a second resolution image (P20) and a difference image (P30). The first resolution image (P10) is an image showing a target object (100) at a first resolution. The second resolution image (P20) corresponds to an image resulting from conversion of the first resolution image (P10) into a second resolution higher than the first resolution. The difference image (P30) corresponds to a difference between the first resolution image (P10) and the second resolution image (P20). The second model part (M12) is a model learned to output a feature amount (F11) of the target object (100) in response to input of the second resolution image (P20) and the difference image (P30). The recognition method includes: obtainment processing (S11); and inference processing (S12). The obtainment processing (S11) is processing of obtaining the first resolution image (P10) as a target image. The inference processing (S12) is processing of providing the target image obtained by the obtainment processing (S11) to the learned model (M10) to allow the learned model (M10) to calculate a feature amount (F11) of a target object (100) shown in the target image. This aspect can improve accuracy of recognition of the target object (100) .

A fifth aspect is a program for performing the recognition method based on the fourth aspect by the arithmetic circuit (13). This aspect can improve accuracy of recognition of the target object (100).

A sixth aspect is a learned method and includes a preparation step (S21) of preparing a model (M20); and a learning step (S22) of performing machine learning using the model (M20) prepared by the preparation step (S21). The model (M20) includes a first model part (M21), a second model part (M22), and a third model part (M23). The first model part (M21) is a model for, in response to input of a first resolution image (P10), outputting a second resolution image (P20) and a difference image (P30). The first resolution image (P10) is an image showing a target object (100) at a first resolution. The second resolution image (P20) corresponds to an image resulting from conversion of the first resolution image (P10) into a second resolution higher than the first resolution. The difference image (P30) corresponds to a difference between the first resolution image (P10) and the second resolution image (P20). The second model part (M22) is a model for outputting a feature amount (F21) of the target object in response to input of the second resolution image (P20) and the difference image (P30) from the first model part (M21). The third model part (M23) is a model for outputting a result (R21) of recognition of the target object (100) in response to input of a feature amount (F21) of the target object (100) from the second model part (M22). The learning step (S22) includes training the model (M20) to learn a relationship between the first resolution image (P10) and a feature amount (F21) of a target object shown in the first resolution image (P10), by machine learning using a learning dataset (D22) which includes the first resolution image (P10) as input and a result (R21) of recognition of a target object (100) shown in the first resolution image (P10) as ground truth. This aspect can improve accuracy of recognition of the target object (100).

A seventh aspect is a learning method based on the sixth aspect. In the seventh aspect, the preparation step (S21) includes: a generation step (S210); and a pre-learning step (S211). The generation step (S210) is a step of generating a learning dataset (D21) including the first resolution image (P10) as input and a set of the second resolution image (P20) and the difference image (P30) as ground truth. The pre-learning step (S211) is a step of training the first model part (M21) to learn a relationship between the first resolution image (P10) and the set of the second resolution image (P20) and the difference image (P30), by using the leaning dataset (D21) generated by the generation step (S210). This aspect can improve accuracy of recognition of the target object (100).

An eighth aspect is a recognition method based on the seventh aspect. In the eighth aspect, the generation step (5210) includes a first step (S210a), a second step (S210b), a third step (S210c), and a fourth step (S210d). The first step (S210a) is a step of obtaining the second resolution image (P20). The second step (S210b) is a step of generating the first resolution image (P10) by converting the second resolution image (P20) obtained by the first step (S210a) into an image at the first resolution. The third step (S210c) is a step of generating the difference image (P30) from the second resolution image (P20) obtained by the first step (S210a) and the first resolution image (P10) generated by the second step (S210b). The fourth step (S210d) is a step of generating a learning dataset (D21) including the first resolution image (P10) generated by the second step (S210b) as input and a set of the second resolution image (P20) prepared by the first step (S210a) and the difference image (P30) generated by the third step (S210c) as ground truth. This aspect can improve accuracy of recognition of the target object (100).

A ninth aspect is a learning method based on the eighth aspect. In the ninth aspect, the third step (S210c) enlarges the first resolution image (P10) generated by the second step (S210b) to a size same as the second resolution image (P20) obtained by the first step (S210a). The third step (S210c) generates the difference image (P30) based on differences of pixels between the first resolution image (P10) enlarged and the second resolution image (P20) obtained by the first step (S210a). This aspect can improve accuracy of recognition of the target object (100).

A tenth aspect is a learning method based on the ninth aspect. In the tenth aspect, a range of each pixel in the difference image (P30) is narrower than a range of each pixel of the first resolution image (P10) enlarged and the second resolution image (P20) obtained by the first step (S210a). This aspect can improve accuracy of recognition of the target object (100).

An eleventh aspect is a learning method based on any one of the sixth to tenth aspects. In the eleventh aspect, the model (M20) includes a fourth model part (M24) for, in response to input of the second resolution image (P20), outputting a result (R22) of determination of whether or not the second resolution image (P20) is an image generated by the first model part (M21). The learning step (S22) includes performing additional learning of at least one of the first model part (M21) or the fourth model part (M24) based on the result (R22) of the determination output from the fourth model part (M24). This aspect can improve accuracy of recognition of the target object (100).

A twelfth aspect is a learned model (M10) and includes a first model part (M11) and a second model part (M12). The first model part (M10) is a model learned to, in response to input of a first resolution image (P10), output a second resolution image (P20) and a difference image (P30). The first resolution image (P10) is an image showing a target object (100) at a first resolution. The second resolution image (P20) corresponds to an image resulting from conversion of the first resolution image (P10) into a second resolution higher than the first resolution. The difference image (P30) corresponds to a difference between the first resolution image (P10) and the second resolution image (P20). The second model part (M12) is a model learned to output a feature amount (F11) of the target object (100) in response to input of the second resolution image (P20) and the difference image (P30). This aspect can improve accuracy of recognition of the target object (100).

A thirteenth aspect is a distillation model generated by distillation of the learned model (M10) based on the twelfth aspect. This aspect can improve accuracy of recognition of the target object (100).

A fourteenth aspect is a recognition system (10) and includes a storage device (12) for storing the distillation model based on the thirteenth aspect; and an arithmetic circuit (13) accessible to the storage device (12). The arithmetic circuit (13) is configured to perform obtainment processing (S11) of obtaining the first resolution image (P10) as a target image, and inference processing (S12) of providing the target image obtained by the obtainment processing (S11) to the distillation model to allow the distillation model to calculate a feature amount (F11) of a target object (100) shown in the target image. This aspect can improve accuracy of recognition of the target object (100).

A fifteenth aspect is a learning model generation method and includes a first step (S210a), a second step (S210b), a third step (S210c), and a fourth step (S210d). The first step (S210a) is a step of obtaining a reference image (P22) showing a target object (100). The second step (S210b) is a step of converting the reference image (P22) into a low resolution image (P12) at a resolution lower than that of the reference image (P22). The third step (S210c) is a step of generating a difference image (P30) corresponding to a difference between the reference image (P22) and the low resolution image (P12). The fourth step (S210d) is a step of generating a learning dataset (D11) including the lower resolution image (P12) as input and a set of the reference image (P22) and the difference image (P30) as ground truth. This aspect can improve accuracy of recognition of the target object (100).

Note that, the second or third aspect may apply to the fourth and fourteenth aspects with appropriate modifications.

### (4) GLOSSARY

In the present disclosure, terms relating to machine learning are used with definition described below.
"learned model" means "inference program" embedded with "learned parameters".
"learned parameters" means parameters (coefficients) resulting from learning using a learning dataset. The learned parameters are generated by automatic adjustment for a desired purpose by inputting a learning dataset into a learning program. The learned parameters have been adjusted for a purpose of learning, but as such are just parameters (information such as mathematical values). By embedding the learned parameters into an inference program, a learned model can function. For example, in a case of deep learning, primary ones of learned parameters may include parameters for weighting links between nodes.
"inference program" means a program enabling outputting a plausible result in response to input by applying embedded learned parameters. One example is a program which defines a series of arithmetic procedures for applying learned parameters obtained as a result of learning to an image given as input to output a result (recognition or determination) in relation to the image.
"learning dataset", also referred to as a training dataset, means secondary processed data generated for facilitating analysis by a learning scheme of interest, by subjecting raw data to conversion or processing including preparation such as removal of missing values, outliers, or the like, addition of different data such as label information (ground truth data), or a combination thereof. In some cases, the learning dataset may include data resulting from so-called "data augmentation" which performs predetermined conversion of raw data.
"raw data" means data which are primarily obtained by users, benders, or others such as companies, researchers, or developers and are subject to conversion or processing to be readable by a database.
"learning program" means a program to perform an algorithm for finding a plausible rule from a learning dataset and generating a model representing the rule. A concrete example is a program defining procedures performed by a computer to realize learning based on an adopted learning method.
"additional learning" means generating new learned parameters by performing further learning by applying a different learning dataset to an existing learned model.
"reuse model" means an inference program embedded with learned parameters which newly generated by additional learning.
"distillation" means generating new learned parameters by using input to and output results from an existing learned model as a learning dataset for a new learned model.
"distillation model" means an inference program embedded with learned parameters newly generated by distillation.

### INDUSTRIAL APPLICABILITY

The present disclosure can apply to recognition systems, recognition methods, programs (computer programs), learning methods, learned models, distillation models, and, learning dataset generation methods. In more detail, the present disclosure can apply to a recognition system, a recognition method, a program (computer program), a learning method, a learned model, a distillation model, and, a learning dataset generation method, in relation to a target object shown in an image.

### Reference Signs List

- 10: Recognition System
- 12: Storage Device
- 13: Arithmetic Circuit
- M10: Learned Model
- M11: First Model Part
- M12: Second Model Part
- M20: Model
- M21: First Model Part
- M22: Second Model Part
- M23: Third Model Part
- M24: Fourth Model Part
- D21: Learning Dataset
- D22: Learning Dataset
- P10: First Resolution Image
- P20: Second Resolution Image
- P30: Difference Image
- F11, F12: Feature Amount
- R11, R21 R22: Result of Recognition (Recognition Result) Result of Determination (Determination Result)
- S11: Obtainment Processing
- S12: Inference Processing
- S13: Output Processing
- S21: Preparation Step
- 5210: Generation Step
- S210a: First Step
- S210b: Second Step
- S210c: Third Step
- S210d: Fourth Step
- S211: Pre-learning Step
- S22: Learning Step
- 100: Target Object

## Claims

1. A recognition system comprising:
a storage device for storing a learned model; and
an arithmetic circuit accessible to the storage device,
the learned model including:
a first model part learned to, in response to input of a first resolution image showing a target object at a first resolution, output a second resolution image and a difference image, the second resolution image being corresponding to an image resulting from conversion of the first resolution image into a second resolution higher than the first resolution, the difference image being corresponding to a difference between the first resolution image and the second resolution image; and
a second model part learned to output a feature amount of the target object in response to input of the second resolution image and the difference image, and
the arithmetic circuit being configured to perform:
obtainment processing of obtaining the first resolution image as a target image; and
inference processing of providing the target image obtained by the obtainment processing to the learned model to allow the learned model to calculate a feature amount of a target object shown in the target image.

2. The recognition system of claim 1, wherein
the inference processing includes recognizing the target object based on a feature amount of a target object shown in the target image.

3. The recognition system of claim 1 or 2, wherein
the arithmetic circuit is configured to execute output processing of outputting a result of the inference processing.

4. A recognition method performed by an arithmetic circuit accessible to a storage device for storing a learned model,
the learned model including
a first model part learned to, in response to input of a first resolution image showing a target object at a first resolution, output a second resolution image and a difference image, the second resolution image being corresponding to an image resulting from conversion of the first resolution image into a second resolution higher than the first resolution, the difference image being corresponding to a difference between the first resolution image and the second resolution image, and
a second model part learned to output a feature amount of the target object in response to input of the second resolution image and the difference image, and
the recognition method comprising:
obtainment processing of obtaining the first resolution image as a target image, and
inference processing of providing the target image obtained by the obtainment processing to the learned model to allow the learned model to calculate a feature amount of a target object shown in the target image.

5. A program for performing the recognition method of claim 4 by the arithmetic circuit.

6. A learning method comprising:
a preparation step of preparing a model; and
a learning step of performing machine learning using the model prepared by the preparation step,
the model including a first model part, a second model part, and a third model part,
the first model part being a model for, in response to input of a first resolution image showing a target object at a first resolution, outputting a second resolution image and a difference image, the second resolution image being corresponding to an image resulting from conversion of the first resolution image into a second resolution higher than the first resolution, the difference image being corresponding to a difference between the first resolution image and the second resolution image,
the second model part being a model for outputting a feature amount of the target object in response to input of the second resolution image and the difference image from the first model part, and
the third model part being a model for outputting a result of recognition of the target object in response to input of a feature amount of the target object from the second model part, and
the learning step including training the model to learn a relationship between the first resolution image and a feature amount of a target object shown in the first resolution image, by machine learning using a learning dataset which includes the first resolution image as input and a result of recognition of a target object shown in the first resolution image as ground truth.

7. The learning method of claim 6, wherein
the preparation step includes:
a generation step of generating a learning dataset including the first resolution image as input and a set of the second resolution image and the difference image as ground truth; and
a pre-learning step of training the first model part to learn a relationship between the first resolution image and the set of the second resolution image and the difference image, by using the leaning dataset generated by the generation step.

8. The learning method of claim 7, wherein
the generation step includes:
a first step of obtaining the second resolution image;
a second step of generating the first resolution image by converting the second resolution image obtained by the first step into an image at the first resolution;
a third step of generating the difference image from the second resolution image obtained by the first step and the first resolution image generated by the second step; and
a fourth step of generating a learning dataset including the first resolution image generated by the second step as input and the set of the second resolution image prepared by the first step and the difference image generated by the third step as ground truth.

9. The learning method of claim 8, wherein
the third step enlarges the first resolution image generated by the second step to a size same as the second resolution image obtained by the first step, and generates the difference image based on differences of pixels between the first resolution image enlarged and the second resolution image obtained by the first step.

10. The learning method of claim 9, wherein
a range of each pixel in the difference image is narrower than a range of each pixel of the first resolution image enlarged and the second resolution image obtained by the first step.

11. The learning method of any one of claims 6 to 10, wherein:
the model includes a fourth model part for, in response to input of the second resolution image, outputting a result of determination of whether or not the second resolution image is an image generated by the first model part; and
the learning step includes performing additional learning of at least one of the first model part or the fourth model part based on the result of the determination output from the fourth model part.

12. A learned model comprising:
a first model part learned to, in response to input of a first resolution image showing a target object at a first resolution, output a second resolution image and a difference image, the second resolution image being corresponding to an image resulting from conversion of the first resolution image into a second resolution higher than the first resolution, the difference image being corresponding to a difference between the first resolution image and the second resolution image; and
a second model part learned to output a feature amount of the target object in response to input of the second resolution image and the difference image.

13. A distillation model generated by distillation of the learned model of claim 12.

14. A recognition system comprising:
a storage device for storing the distillation model of claim 13; and
an arithmetic circuit accessible to the storage device,
the arithmetic circuit being configured to perform
obtainment processing of obtaining the first resolution image as a target image, and
inference processing of providing the target image obtained by the obtainment processing to the distillation model to allow the distillation model to calculate a feature amount of a target object shown in the target image.

15. A learning model generation method comprising:
a first step of obtaining a reference image showing a target object;
a second step of converting the reference image into a low resolution image at a resolution lower than that of the reference image;
a third step of generating a difference image corresponding to a difference between the reference image and the low resolution image; and
a fourth step of generating a learning dataset including the lower resolution image as input and a set of the reference image and the difference image as ground truth.
